# EUROPÄISCHE PATENTSCHRIFT

(11) **EP 2 802 432 B1**
(45) Veröffentlichungstag und Bekanntmachung des Hinweises auf die Patenterteilung: **13.04.2016**
(21) Anmeldenummer: 13701922.0
(22) Anmeldetag: 08.01.2013
(51) Int. Cl.: B23B 51/00, B27G 15/02, F16B 13/08, F16B 37/12

(54) **WERKZEUG ZUM ERZEUGEN EINES RINGFÖRMIGEN HINTERSCHNITTES IN EINEM KÖRPER, VERFAHREN ZUM FESTLEGEN EINES DÜBELS IN EINEM KÖRPER, DÜBEL ZUM EINSETZEN IN EINE BOHRUNG UND VERWENDUNG EINES DÜBELS**
TOOL FOR PRODUCING AN ANNULAR UNDERCUT IN A BODY, METHOD FOR FIXING A DOWEL IN A BODY, DOWEL FOR INSERTING INTO A BORE AND USE OF A DOWEL
OUTIL DE RÉALISATION D'UNE CONTRE-DÉPOUILLE ANNULAIRE DANS UN CORPS, PROCÉDÉ DE FIXATION D'UNE CHEVILLE DANS UN CORPS, CHEVILLE À INSÉRER DANS UN PERÇAGE ET UTILISATION D'UNE CHEVILLE

(30) Priorität: 10.01.2012 DE 102012100148
(43) Veröffentlichungstag der Anmeldung: 19.11.2014
(73) Patentinhaber: Flaig, Hartmut, 78554 Aldingen (DE)
(72) Erfinder: HOLSCHER, Winfried, K., W., 78234 Engen (DE)
(74) Vertreter: Wagner, Kilian
(86) Internationale Anmeldenummer: PCT/EP2013/050184
(87) Internationale Veröffentlichungsnummer: WO 2013/104601

(56) Entgegenhaltungen:
- EP-A1- 2 395 247
- WO-A1-97/18917
- WO-A1-2010/062425
- WO-A1-2012/001110
- DE-A1- 3 206 678
- DE-A1- 3 312 141
- DE-A1- 3 817 806

## Beschreibung

Die Erfindung betrifft ein Werkzeug gemäß Anspruch 1 zum Erzeugen eines ringförmigen Hinterschnitts in einem Körper, ein Verfahren gemäß Anspruch 11 zum Festlegen eines Dübels in einem Körper. Ferner betrifft die Erfindung einen Dübel zum Einsetzen in eine Bohrung gemäß Anspruch 14 und eine Verwendung eines Dübels gemäß Anspruch 17.

Um Gegenstände an einem Holzkörper festzulegen, ist es bekannt, in den Holzkörper eine Bohrung einzubringen, in welche ein ein Innengewinde aufweisendes Metallteil eingesetzt und mit Hilfe mehrerer schräg angeordneter Schrauben in dem Holzkörper festgelegt wird. In das Innengewinde können dann zu befestigende Gegenstände eingeschraubt werden. Das Festlegen des Metallteils ist aufgrund der Notwendigkeit des Fixierens einer Vielzahl von schrägen Schrauben vergleichsweise aufwändig.

Aus der DE 38 17 806 A1 ist ein Werkzeug zur Herstellung von Hinterschneidungen ab. Bei einem Verschieben des Trägerkörpers kommt es zu einem Auslenken einer Schneidklinge.

Aus der DE 32 06 678 A1 ist ein Bohrwerkzeug zum Erzeugen eines Hinterschnitts in einer vorgebohrten zylindrischen Bohrung bekannt, wobei vordere Schneiden eines Trägers über ein sich am Bohrungsgrund abstützendes Spreizelement aufspreizbar sind, Die WO97/18917 A1 beschreibt ein Bohrwerkzeug zum Erzeugen von Hinterschnitten mit verschwenkbar angeordneten Klingen.

Die WO2010/062425 A1 zeigt einen Dübel mit in einer Einsetzrichtung orientierten, in radialer Richtung aufweitbaren Zinnen.

Die WO2012/001110 A1 zeigt einen Dübel mit entgegen der Einsetzrichtung orientierten in radialer Richtung aufweitbaren Zinnen mit einer planen vorderen Stirnseite.

Die EP 23 95 247 A1 beschreibt einen Dübel mit in radialer Richtung aufweitbaren Zinnen.

Die DE 33 12 141 zeigt einen Dübel mit in radialer Richtung aufweitbaren Zinnen und planer Stirnseite.

Ausgehend von dem vorgenannten Stand der Technik liegt der Erfindung die Aufgabe zugrunde, ein Werkzeug anzugeben, mit welchem erleichtert ein, vorzugsweise ein Innengewinde aufweisender Dübel in einem Holzkörper, einem Steinkörper oder einem Kunststoffkörper festlegbar ist. Ferner besteht die Aufgabe darin, ein entsprechend vereinfachtes Verfahren, einen geeigneten Dübel, ein System aus Dübel und Einschraubteil sowie ein System aus Werkzeug und Dübel anzugeben.

Diese Aufgabe wird hinsichtlich des Werkzeugs mit den Merkmalen des Anspruchs 1, hinsichtlich des Verfahrens mit den Merkmalen des Anspruchs 11, hinsichtlich des Dübels mit den Merkmalen des Anspruchs 14, hinsichtlich des Dübel-Einschraubteil-Systems mit den Merkmalen des Anspruchs 16 und hinsichtlich des Dübel-Werkzeug-Systems mit den Merkmalen des Anspruchs 19 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt zunächst der Gedanke zugrunde, in dem Holzkörper, dem Steinkörper oder dem Kunststoffkörper zum Festlegen des Dübels einen Hinterschnitt zu erzeugen, in welchen der Dübel nach radial außen hinein verdrängbar ist, um sich in axialer Richtung an der Hinterschnittbegrenzung abstützen zu können, so dass der Dübel auf Zug belastbar ist. Auch ein zusätzliches Verschrauben mit dem Körper kann somit bevorzugt entfallen. Zum Erzeugen eines solchen, ringförmigen (umfangsgeschlossenen) Hinterschnittes schlägt die Erfindung ein um eine Drehachse rotierbar antreibbares Werkzeug vor, welches im Wesentlichen zwei miteinander in Wechselwirkung tretende Hauptabschnitte aufweist, nämlich ein Frästeil und Abstützmittel, wobei, wie später noch erläutert werden wird, Frästeil und Abstützmittel einteilig ausgebildet oder von verschiedenen, mechanisch aneinander festgelegten Bauteilen gebildet sein können. Jedenfalls ist das Frästeil winklig zur Drehachse verstellbar geführt, so dass das Frästeil in radialer Richtung in Bezug auf die Drehachse beim Rotieren des Werkzeugs ausgefahren werden kann. Zum radialen Ausfahren des Frästeils sind die Abstützmittel vorgesehen, die derart ausgebildet und angeordnet sind, dass diese sich entlang der Drehachse erstrecken und am Grund einer in den Körper eingebrachten, bevorzugt einen ebenen (flachen) Grund aufweisenden, Bohrung, d.h. bevorzugt einer Sacklochflachbohrung abstützbar sind, derart, dass ein Trägerkörper des Werkzeugs beim Kraftbeaufschlagen des Werkzeugs, insbesondere des Trägerkörpers, entlang der Drehachse in Richtung Nutgrund so relativ zu den sich abstützenden und damit ortsfesten Abstützmitteln verstellt wird, dass sich der Abstand zwischen einer Abstützfläche der Abstützmittel und dem Trägerkörper reduziert, wobei die Abstützmittel aufgrund der mechanischen Kopplung oder einteiligen Ausbildung mit dem Frästeil bei dieser Relativbewegung das Frästeil entlang der winklig zur Drehachse des Trägerkörpers verlaufenden Verstellachse nach radial außen verstellen, wodurch das Frästeil weiter nach radial außen in den Körper zum Erzeugen des Hinterschnittes hineingetrieben wird. Bevorzugt werden die Abstützmittel bei dieser Relativbewegung zwischen den Abstützmitteln und dem Trägerkörper nicht nur entlang der Drehachse verstellt, sondern zusätzlich auch in radialer Richtung, so dass also auch die Abstützmittel zusammen mit dem Frästeil parallel zur Verstellachse des Frästeils verschoben werden.

Besonders bevorzugt ist es, wenn die Verstellachse derart zur Drehachse geneigt ist, dass das Frästeil beim Kraftbeaufschlagen des Werkzeugs in Richtung Bohrungsgrund radialer Richtung nach außen bewegt wird und sich gleichzeitig der Trägerkörper weiter in axialer Richtung hin zum Bohrungsgrund bewegt. Hierzu ist bevorzugt ein schräg zur Drehachse verlaufender Führungskanal für das Frästeil nach schräg oben gerichtet. Diese Anordnung des Frästeils bzw. der Verstellachse stellt sicher, dass das Frästeil nach vollendeter Fräsung beim axialen Entfernen des Werkzeugs aus der Bohrung (auch ohne Federkraftunterstützung) wieder zurück in eine Ausgangsstellung verfährt, in welcher es ein problemloses Herausziehen des Werkzeugs ermöglicht, insbesondere indem das Frästeil, wie später noch erläutert werden wird, eine, vorzugsweise zylindrische Hüllkontur des Trägerkörpers in radialer Richtung nach außen nicht überragt, wodurch ein Verhaken bzw. Hängenbleiben des Frästeils in dem geschaffenen Hinterschnitt mit Vorteil vermieden wird. Besonders zweckmäßig ist es, wenn zum Rückverstellen des Frästeils an diesem eine entsprechende Schräge vorgesehen ist, welche bevorzugt in eine entgegengesetzte Richtung geneigt ist wie die Verstellachse, d.h. schräg nach unten, um sich mit dieser Schräge an einer oberen Wand des hergestellten Hinterschnitts beim Herausziehen des Werkzeugs abstützen zu können, um somit wiederum in radialer Richtung nach innen verdrängt zu werden. Grundsätzlich ist es möglich, dass das Verstellen des Frästeils nach radial außen entgegen der Federkraft einer Feder erfolgt. Besonders zweckmäßig ist es jedoch, auf eine solche Feder zu verzichten und das Rückverstellen des Frästeils gewichtskraftbedingt, ggf. kombiniert mit dem Abstützen über eine Schrägfläche am Körper zu realisieren.

Im Hinblick auf die Ausbildung der Kombination aus Abstützmittel und Frästeils gibt es unterschiedliche Möglichkeiten. Im einfachsten Fall und zur Ermöglichung einer einfachen Montage sind die Abstützmittel als von dem Frästeil separates Bauteil ausgebildet, wobei die beiden Bauteile, beispielsweise durch Verschrauben miteinander verbunden sind. So kann wieder im einfachsten Fall als Abstützmittel eine Schraube vorgesehen werden, die in eine Innengewindeöffnung des Frästeils eingeschraubt ist. Andere Befestigungsmöglichkeiten sind denkbar, auch eine mittelbare Befestigung über beispielsweise ein Zwischenstück.

Wie eingangs bereits angedeutet ist es besonders zweckmäßig, wenn die Verstellachse so verläuft, dass der Trägerkörper des Werkzeugs beim radialen Verstellen des Frästeils nach außen axial weiter in Richtung Grund einer Bohrung im Körper verstellt wird, so dass das Frästeil, sobald das Werkzeug aus der Bohrung herausgezogen wird und folglich die Abstützmittel das Frästeil nicht mehr nach radial außen kraftbeaufschlagen, wieder in eine Ausgangsposition gleiten kann, entweder ausschließlich schwerkraftbedingt oder unterstützt durch eine Abstützkraft des Frästeils, insbesondere einer Schrägseite des Frästeils an einer, vorzugsweise oberen Begrenzungswand des hergestellten Hinterschnitts beim Herausziehen des Werkzeugs.

Bevorzugt ist das Frästeil in der Ausgangsposition, zumindest näherungsweise in der Hüllkontur des Trägerkörpers aufgenommen, überragt somit den Trägerkörper nicht in unzulässiger Weise, so dass das Werkzeug ohne Verhaken aus der Bohrung entnommen werden kann. D.h. in der Ausgangsposition ist der Durchmesser des Werkzeugs inklusive Frästeil geringer als der Bohrungsdurchmesser.

Im Hinblick auf die Ausbildung der Führung für das Frästeil gibt es unterschiedliche Möglichkeiten. Besonders zweckmäßig ist es in dem Trägerkörper einen, bevorzugt linearen, beispielsweise als Durchgangskanal ausgebildeten Kanal vorzusehen, in welchem das Frästeil verschiebbar aufgenommen ist. Als besonders zweckmäßig hat es sich erwiesen, wenn der Kanal und vorzugsweise auch das Frästeil in einer senkrecht zur Verstellrichtung verlaufenden Schnittansicht eine Kontur aufweist/aufweisen, die gebildet ist von zwei voneinander beabstandeten Halbkreisabschnitten, die über zwei parallele Wandabschnitte miteinander verbunden sind. Hierdurch kann zum einen eine optimale Führung gewährleistet und zudem ein Verdrehen oder Verkanten des Frästeils sicher verhindert werden.

Bevorzugt ist auch den Abstützmitteln ein, in diesem Fall parallel zur Drehachse orientierter Kanal zugeordnet, dessen Innenumfangswand, insbesondere durch Zusammenwirken mit einer Umfangswand der Abstützmittel mindestens einen Anschlag zur Begrenzung der Verstellstrecke des Frästeils bildet. Bevorzugt werden sowohl eine Ausgangsposition des Frästeils innerhalb der Hüllkontur des Trägerkörpers als auch ein maximaler radialer Ausschlag des Frästeils von der Innenumfangswand durch Zusammenwirken mit den Abstützmitteln begrenzt.

Als besonders zweckmäßig hat es sich herausgestellt, wenn der Kanal einen Kanalquerschnitt aufweist, der zwei Halbkreisabschnitte aufweist, die über zwei parallele Seitenwandabschnitte miteinander verbunden sind.

Als besonders zweckmäßig hat es sich herausgestellt, wenn der Winkel der Verstellachse zu einer Radialebene aus einem Wertebereich zwischen 5° und 55°, vorzugsweise zwischen 10° und 50°, noch weiter bevorzugt zwischen 20° und 40° gewählt ist. Besonders bevorzugt beträgt der Winkel etwa 30°.

Um eine optimale Spanabführung aus der Sacklochbohrung im Körper heraus zu ermöglichen, sind in Weiterbildung der Erfindung Spanabführmittel am Werkzeug, insbesondere in Form mindestens einer Nut am Trägerkörper vorgesehen, wobei es besonders zweckmäßig ist, wenn diese Nut gewendelt ist, um bei einer Drehbewegung des Trägerkörpers optimal Holzspäne in Richtung Bohrungsöffnung transportieren zu können.

Wie bereits eingangs erwähnt ist es besonders zweckmäßig, wenn das Frästeil auf einer von den Abstützmitteln abgewandten Seite eine vorzugsweise als Schrägfläche ausgebildete Kraftbeaufschlagungsfläche aufweist, um das Frästeil beim Herausziehen des Werkzeugs wieder in den Trägerkörper hineinzudrücken bzw. zu verschieben.

Besonders zweckmäßig ist es, wenn das vorzugsweise als Schälmesser ausgebildete Frästeil zwei winklig zueinander verlaufende Fräskanten aufweist. Besonders bevorzugt ist es, wenn das Werkzeug, insbesondere auf der von der Abstützfläche der Abstützmittel abgewandten Seite einen Antrieb zum Festlegen des Werkzeugs an einem Antriebswerkzeug, insbesondere an einem Elektrohandwerkzeug aufweist.

Idealerweise ist der Antrieb zum Festlegen in einem Spannfutter, beispielsweise einer Bohrmaschine oder eine Schraubmaschine ausgebildet, beispielsweise in Form eines Mehrkants, bevorzugt Sechskants.

Die Erfindung führt auch auf ein Verfahren zum Festlegen eines Dübels in einem Holzkörper, einem Steinkörper oder einem Kunststoffkörper, wobei nach dem Einbringen einer Sacklochflachbohrung in den Körper, beispielsweise mit einer Bohrmaschine, ein ringsförmiger Hinterschnitt in dem Körper mit Hilfe eines erfindungsgemäßen Werkzeuges hergestellt wird, wobei hierzu das Werkzeug in die Bohrung eingeführt wird, und in Richtung Grund der Bohrung kraftbeaufschlagt wird, so dass die sich vorzugsweise am Nutgrund abstützende Abstützfläche der Abstützmittel entgegen der Einbringrichtung des Werkzeugs kraftbeaufschlagt wird und dadurch die Abstützmittel zusammen mit dem Frästeil derart verstellt, dass dieses während das Werkzeug rotiert, nach radial außen verstellt wird, um sich mit Abstand zum Bohrungsrand zur Erzeugung des Hinterschnittes in den Körper einzufräsen bzw. einzuschälen. Nach Erzeugung des Hinterschnittes wird das Werkzeug aus der Bohrung entfernt und in die Bohrung wird ein Dübel eingesetzt, der sich durch entgegen der Einsetzrichtung orientierte Zinnen auszeichnet, die in radialer Richtung aufweitbar sind. Hierzu sind die Zinnen entweder durch freie Abschnitte voneinander beabstandet oder miteinander über mindestens einen Materialschwächungsbereich verbunden. Werden nun die Zinnen mit einer Radialkraftkomponente beaufschlagt, werden diese so aufgeweitet, dass sie in den Hinterschnitt hineinverstellt werden und sich somit in axialer Richtung in diesem abstützen können. Bevorzugt weist der Dübel ein Innengewinde auf. Alternativ ist der Dübel innengewindefrei und ein solches Innengewinde ist in diesem mit einer speziellen Kerb- bzw. Schneidschraube einformbar, um dann an dem Dübel ein Bauteil festlegen zu können.

Besonders zweckmäßig ist es, wenn der Dübel auf der von den Zinnen abgewandten Seite oder seitliche Fixiermittel, insbesondere in Form mindestens einer Kralle aufweist, mit denen der Dübel provisorisch im Körper fixiert bzw. gehalten werden kann, bevorzugt drehfest. Hierzu wird der Dübel bevorzugt axialkraftbeaufschlagt vor und/oder während des Beaufschlagens der Zinnen mit einer Radialkraftkomponente. Besonders zweckmäßig ist es, wenn das Aufweiten der Zinnen durch Rotieren eines entsprechenden Aufweitwerkzeuges erfolgt, welches noch weiter bevorzugt eine einen mit den Zinnen in Wechselwirkung tretenden Aufweitkonus aufweist, der bei Axialkraftbeaufschlagung des Werkzeugs die entsprechende Radialkraftkomponente erzeugt und die Zinnen nach radial außen in den Hinterschnitt hinein aufweitet.

Ferner führt die Erfindung auf einen Dübel und dessen Verwendung zum Festlegen, in einem Holzkörper oder alternativ in einem Steinkörper oder weiter alternativ in einem Kunststoffkörper, bevorzugt ein Vollmaterialkunststoffkörper. Der Dübel zeichnet sich dadurch aus, dass er endseitig entgegen einer Einbringrichtung orientierte Zinnen aufweist, die entweder, was bevorzugt ist, in Umfangsrichtung voneinander beabstandet sind oder die zunächst noch, d.h. vor dem Aufweiten in Umfangsrichtung durch Materialschwächungsbereiche miteinander verbunden sind, wobei die Materialschwächungsbereiche derart ausgelegt sind, dass diese beim radialen Aufweiten der Zinnen durch Radialkraftbeaufschlagung aufbrechen, so dass sich die Zinnen in radialer Richtung verstellen können. Der erfindungsgemäße Dübel umfasst ferner einen Hülsenabschnitt an dessen Innenumfang entweder noch kein Innengewinde vorgesehen ist, sondern lediglich ein Bereich, in den ein Innengewinde, insbesondere mittels eines Einsatzteils, einbringbar ist. Alternativ ist ein derartiges Innengewinde, was bevorzugt ist, bereits vorgesehen, so dass dieses nicht im Nachhinein eingebracht werden muss. Besonders bevorzugt ist es zudem, wenn der Dübel Fixiermittel aufweist, um den Dübel vor dem radialen Aufweiten der Zinnen drehfest im Körper fixieren zu können. Dabei ist es besonders bevorzugt, wenn es sich um in die Einbring- bzw. Einsetzrichtung orientierte, bevorzugt krallenförmige Fixiermittel handelt, die in den Grund einer Sacklochbohrung eingeschlagen werden können. Zusätzlich oder alternativ sind seitliche Fixiermittel, insbesondere axial angrenzend an die Zinnen vorgesehen, die den Hülsenabschnitt mit Innengewinde in radialer Richtung nach außen überragen und die beim axialen Eintreiben des Dübels für eine Verankerung im Körper sorgen. Bevorzugt sind mehrere, weiter bevorzugt gleichmäßig in Umfangsrichtung verteilt angeordnete Radialfortsätze zur Fixierung vorgesehen.

Ganz besonders bevorzugt ist eine Ausführungsvariante des Dübels, bei welchem die radial aufweitbaren Zinnen vor dem Aufweiten, insbesondere mit einem axial entgegen der Einbringrichtung orientierten Endabschnitt nach radial innen ragen, so dass das Aufweitwerkzeug seine Radialkraftkomponente möglichst weit radial innen aufbringen kann, mit dem Ergebnis, dass sich die Zinnen besonders gut und besonders weit in radialer Richtung aufweiten lassen. Bevorzugt ist an dem radial nach innen ragenden Abschnitt, insbesondere einem axialen Endabschnitt der Zinnen eine Schrägfläche, insbesondere eine Fase, bevorzugt ein Innenkonus vorgesehen, um in Wechselwirkung mit dem Aufweitwerkzeug, insbesondere einem Aufweitkonus des Aufweitwerkzeugs treten zu können.

Ganz besonders bevorzugt ist ein den Innenumfang des Hülsenabschnittes nach radial innen überragender Kragabschnitt so bemessen, dass der Abstand zwischen zwei einander gegenüberliegenden Zinnen bzw. ein freier Durchmesser im Bereich dieses Tragabschnittes deutlich geringer ist als der Innendurchmesser des Hülsenabschnittes, bevorzugt ist der Durchmesser mindestes um 20% geringer, noch weitere bevorzugt um mindestens 50%.

Darüber hinaus führt die Erfindung auf ein erstes System umfassend ein erfindungsgemäßes Werkzeug sowie einen vorzugsweise wie zuvor beschrieben ausgebildeten, Dübel. Besonders zweckmäßig ist es, wenn der Dübel die ebenfalls zuvor beschriebenen, endseitigen Fixiermittel zum Fixieren im Holzkörper aufweist.

Ferner führt die Erfindung auf ein weiteres (zweites) System (Dübel-Einschraubteil-System), umfassend einen wie zuvor beschrieben ausgebildeten, erfindungsgemäßen Dübel mit in radialer Richtung nach außen aufweitbaren Zinnen und einem Innengewinde sowie einem mit dem Innengewinde des Dübels verschraubbaren Einschraubteils, welches gleichzeitig derart ausgebildet ist, dass mit einem Aufweitabschnitt des Einschraubteils beim Einschrauben eines Außengewindes des Einschraubteils in das Innengewinde des Dübels die Zinnen des Dübels in radialer Richtung nach außen hinter den Hinterschnitt aufgeweitet werden können. Das Einschraubteil weist neben seinem, vorzugsweise endseitigen Außengewinde, welches mit dem Innengewinde des Dübels verschraubbar ist, ein Innengewinde auf, welches in einem in Bezug auf den Außengewindeabschnitt durchmessererweiterten Innengewindeabschnitt eingebracht ist. Bevorzugt entspricht der Innendurchmesser des Innengewindes des Einschraubteils dem Innendurchmesser des Innengewindes des Dübels.

Die Axialerstreckung des Einschraubteils ist vorzugsweise so bemessen, dass eine ringförmige Stirnseite des Einschraubteils den Öffnungsrand einer in einem Holzkörper vorgesehenen Öffnung zur Aufnahme des Dübels nicht überragt, höchstens mit bevorzugt vorgesehenen Fixierteilen, an denen ein mit dem Holzkörper zu befestigendes Holzteil vor und/oder während des Verschraubens einer Fixierschraube mit dem Innengewinde des Einschraubteils drehfest fixiert werden kann. Der Aufweitabschnitt des Einschraubteils verbindet den (unteren) Außengewindeabschnitt mit dem oberen Innengewindeabschnitt, wobei der Außendurchmesser des Innengewindeabschnitts bevorzugt dem Durchmesser der Sacklochbohrung im Holzkörper abzüglich eines Spiels entspricht.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine Längsschnittansicht durch ein bevorzugtes Ausführungsbeispiel eines nach dem Konzept der Erfindung ausge bildeten Werkzeugs,
- Fig. 2: eine in Bezug auf Fig. 1 gedrehte Außenansicht des Werkzeugs, und
- Fig. 3: einen in einem Körper festgelegten Dübel mit nach radial außen aufgeweiteten Zinnen die sich axial an einem mittels eines nach dem Konzept der Erfindung hergestellten Hinterschnittes im Holzkörper axial abstützen,
- Fig. 4: ein Einschraubeinsatz zum Einschrauben in das Innengewinde eines in Fig. 3 oder Fig. 6a - Fig. 6c gezeigten Dübels zum gleichzeitigen Aufweiten der Dübelzinnen,
- Fig. 5: ein System bestehend aus Dübel mit aufweitbaren Zinnen sowie ein Schraubteil,
- Fig. 6a bis 6c: unterschiedliche Ansichten eines alternativen Dübels, bei dem seitliche Fixiermittel vorgesehen sind,
- Fig. 7: ein besonders bevorzugtes Ausführungsbeispiel eines Dübels, bei dem die Zinnen (zunächst) radial nach innen ragen,
- Fig. 8a bis 8c: unterschiedliche, teilweise geschnittene Ansichten eines Einschraubeinsatzes zum Einschrauben eines beispielsweise in Fig. 3 oder den Fig. 6a bis 6c gezeigten Dübels zum gleichzeitigen Aufweiten der Dübelzinnen,
- Fig. 9a bis 9c: unterschiedliche, teilweise geschnittene Ansichten eines alternativen Werkzeugs, und
- Fig. 10a bis Fig. 10c: unterschiedliche Ansichten einer bevorzugten Ausführungsform eines Frästeils für ein Werkzeug.

In den Figuren sind gleiche Elemente und Elemente mit der gleichen Funktion mit den gleichen Bezugszeichen gekennzeichnet.

Teilweise sind in den Figuren Bemaßung bevorzugter Ausführungsvarianten wiedergegeben. Diese Abmessungen und Winkelangaben dienen in erster Linie dem besseren Verständnis und sollen für den Schutzbereich der Erfindung nicht beschränkend sein. Dennoch sollen die Maße und sich beliebige aus mindestens zwei Maßen ergebende Abmessungsverhältnisse oder Winkelverhältnisse als weiterbildungsgemäß offenbart gelten und beanspruchbar sein.

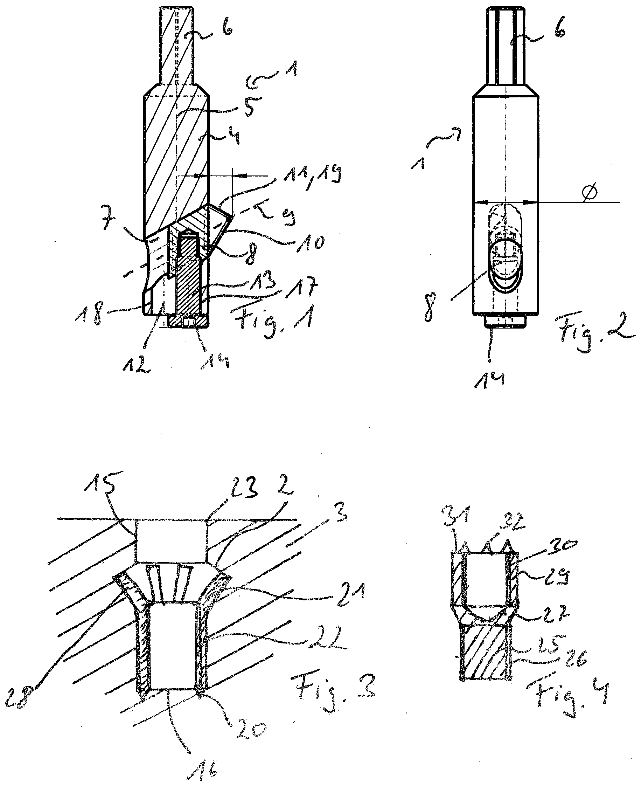

In den Fig. 1 und 2 ist ein als Aufsatz für ein Elektrohandwerkzeug ausgebildetes Werkzeug 1 zum Erzeugen eines beispielhaft in Fig. 3 gezeigten Hinterschnitts 2 in einem Körper 3 (in dem Ausführungsbeispiel ein Holzkörper), insbesondere einem Massivholzkörper gezelgt.

Das Werkzeug 1 umfasst einen metallischen, vorzugsweise durch Kaltfließpressen hergestellten Trägerkörper 4, welcher um eine als Längsmittelachse ausgebildete Drehachse 5 rotierbar ist. Zu diesem Zweck ist der Trägerkörper 4 endseitig mit einem, hier als Sechskantantrieb ausgebildeten Antrieb 6 versehen, um das Werkzeug 1, insbesondere motorisch rotieren bzw. antreiben zu können.

Der Trägerkörper 4 ist in einem oberen Abschnitt massiv ausgebildet und weist in einem unteren Bereich einen schräg verlaufenden Kanal 7 als Führungskanal für ein Frästeil 8 auf, welches somit am bzw. im Trägerkörper 4 entlang einer winklig zur Drehachse 5 verlaufenden Verstellachse 9 verstellbar ist, derart, dass das Frästeil 8 mit zwei winklig zuelnander verlaufenden Fräskanten 10, 11 in radialer Richtung aus einer Hüllkontur des Trägerkörpers 4 hinaus verstellbar ist. Die Verstellachse 9 ist dabei so geneigt, dass das Frästeil 8 bel seiner Radialverstellung nach außen gleichzeitig axial relativ zum Antrieb 6 verstellt wird (verstellt wird dabei der Trägerkörper axial in Richtung Bohrungsgrund). In dem gezeigten Ausführungsbeispiel spannen die Verstellachse 9 und die Drehachse 5 einen Winkel von 60° auf.

Aus Fig. 2 ist die Querschnittskontur des Kanals 7 ersichtlich. Dieser weist zwei halbkreisförmige Abschnitte (einen oberen und einen unteren Abschnitt) auf, die über parallele Seitenwandabschnitte miteinander verbunden sind. Die Querschnittskontur des Frästeils 8 ist formkongruent hierzu ausgebildet, so dass das Frästeil 8 verdrehsicher innerhalb des Kanals 7 gleitend geführt ist.

Parallel zur Drehachse 5 erstreckt sich von unten her, d.h. von der von dem Antrieb 6 abgewandten Seite des Trägerkörpers 4 her, ein Kanal 12, der nach unten hin durchsetzt ist von, hier von einer Schraube gebildeten Abstützmitteln 13, die über eine Gewindeverbindung mit dem Frästeil 8 mechanisch fest verbunden sind. Die Abstützmittel 13 weisen eine von einem Schraubenkopf der Schraube gebildete Abstützfläche 14 auf, mit der sich das Werkzeug 1 beim Einsetzen in eine Sacklockbohrung 15 mit flachem Boden in einen Körper 3 (Holzkörper oder Steinkörper oder Kunststoffkörper) am Grund 16 der Bohrung abstützen kann. Bei einer weiteren Verstellbewegung des Trägerkörpers 4 in die Bohrung 15 hinein erfolgt eine Relativbewegung zwischen den Abstützmitteln 13 und dem Trägerkörper 4 derart, dass die Abstützmittel 13 weiter in den Trägerkörper 4 hineinverstellt werden und dabei nicht nur entlang der Drehachse 5 entgegen der Einsetzrichtung des Werkzeugs 1 in die Bohrung wandern, sondern auch in radialer Richtung hierzu, so dass sich durch Vektoraddition die durch die Verstellachse 9 definierte resultierende Bewegungsrichtung ergibt. Durch die Kopplung mit dem Frästeil 8 wird dieses entlang der Verstellachse 9 axial relativ zum Trägerkörper und gleichzeitig nach radial außen verstellt, wobei bei angetriebenem, d.h. rotierendem Werkzeug von dem Frästeil hierbei bzw. hierdurch der Hinterschnitt 2 erzeugt wird.

Aus Fig. 1 ist ersichtlich, dass die Innenumfangswand des Kanals 12 zwei einander gegenüberliegende Anschläge 17, 18 für die Abstützmittel 13 bildet. Die Anschläge 17, 18 begrenzen somit die radiale Verstellbarkeit der Abstützmittel 13 und somit auch des Frästeils 8. In der durch den in der linken Zeichnungshälfte angeordneten Anschlag 18 wird eine Ausgangsposition begrenzt, in welcher das Frästeil 8 vollständig innerhalb der in diesem Bereich zylindrischen Hüllkontur des Trägerkörpers 4 aufgenommen ist, während der gegenüberliegende Anschlag 17 die maximal in radialer Richtung ausgefahrene Position des Frästeils 8 definiert.

Die in Fig. 1 mit den Bezugszeichen 11 gekennzeichnete Fräskante bildet gleichzeitig eine Schrägfläche 19, mit der sich das Frästeil 8 nach erfolgter Herstellung des Hinterschnitts 2 beim Herausziehen des Werkzeugs 1 aus der Bohrung 15 an einer Hinterschnittwand abstützen kann, wodurch das Frästeil 8 in den Trägerkörper 4 zurück in seine durch den Anschlag 18 begrenzte Ausgangsposition verstellt werden kann. In dem gezeigten Ausführungsbeispiel ist die Schrägfläche 19 entgegengesetzt geneigt zur Verstellachse 9 des Frästeils 8.

Nach Herstellen des Hinterschnittes 2 kann in die Bohrung 15 ein, vorzugsweise zunächst noch eine zylindrische Hüllkontur aufweisender, bevorzugt metallischer Dübel eingesetzt werden, welcher zunächst mit Hilfe von endseitigen, in Einsetzrichtung orientierten, hier krallenförmigen Fixiermitteln 20 im Grund 16 der Bohrung 15 drehfest fixiert wird. Daraufhin werden, vorzugsweise zunächst noch im Wesentlichen konzentrisch zur Längsmittelachse des Dübels 21 angeordnete Zinnen in radialer Richtung kraftbeaufschlagt. Anschließend kann in ein Innengewinde 22 des Dübels 21 ein Außengewindeelement eingedreht und der Dübel 21 in Richtung Öffnungsrand 23 des Körpers 3 kraftbeaufschlagt werden.

Besonders bevorzugt ist es, wenn ein an dem Dübel 21 festzulegendes Bauteil nicht unmittelbar mit dem Innengewinde 22 des Dübels 21 verschraubt wird, sondern wenn stattdessen ein In Fig. 4 gezeigtes kombiniertes Einschraub- und Aufweitteil 24 zum Einsatz kommt, das in seinem oberen (vom Bohrungsgrad abgewandten) Bereich hülsenförmige Einschraubteil 24, weist in einem unteren Bereich einen Außengewindeabschnitt 25 aus Vollmaterial auf, welcher an seinem Außenumfang ein Außengewinde 26 trägt, welches an das Innengewinde 22 des Dübels 21 angepasst ist bzw. mit diesem verschraubbar ist. Benachbart zu dem in dem gezeigten Ausführungsbeispiel als Vollmaterialabschnitt ausgebildeten Außengewindeabschnitt 25 schließt ein, hier konischer, Aufweitabschnitt 27 an, der das Außengewinde 26 in radialer Richtung überragt und derart an den Dübel 21 angepasst ist, dass dessen Zinnen 28 (vgl. Fig. 3) aus einer zunächst zylindrischen Ausrichtung in radialer Richtung nach außen in die radiale Ausnehmung bzw. hinter den Hinterschnitt 2 beim Verschrauben des Außengewindes 26 des Einschraubteils 24 mit dem Innengewinde 22 des Dübels 21 hineinverdrängt werden. Der Aufweitabschnitt 27 verbreitert, von unten her betrachtet, den Außendurchmesser des Einschraubteils 24 von dem Außendurchmesser des Außengewindes 26 auf einen Außendurchmesser eines oberen Innengewindeabschnittes 29, dessen Außendurchmesser bevorzugt dem Innendurchmesser der Bohrung 15 im Körper 3 abzüglich eines Spiels entspricht. In dem zylindrischen Innengewindeabschnitt 29 ist ein Innengewinde 30 eingebracht, in dem ein zu befestigendes Bauteil festgelegt werden kann.

In dem gezeigten Ausführungsbeispiel entspricht der Durchmesser des Innengewindes 30 bevorzugt dem Durchmesser des Innengewindes 22 des Dübels 21.

Alternativ kann das Innengewinde 30 auch kleiner bemessen werden als das Innengewinde 22 des Dübels 21.

In diesem Fall ist es möglich, das Innengewinde 30 in den Außengewindeabschnitt 25 fortzuführen bzw. in einer Innengewindedurchgangsöffnung anzuordnen, die das gesamte Einschraubteil 24 durchsetzt.

Die Axialerstreckung des Einschraubteils 24, genauer die Strecke zwischen dem unteren Ende des konischen Aufweitabschnitts 27 und einer oberen, ringförmigen Stirnfläche 31 des Innengewindeabschnittes 29 ist so bemessen, dass die Stirnfläche 31 den Öffnungsrand 23 nicht überragt, vorzugsweise etwas, insbesondere um mindestens 0,2mm unterhalb dieses Öffnungsrandes 23 im eingeschraubten Zustand des Einschraubteils 24 angeordnet ist. Von der Stirnfläche 31 ragen nach oben, hier zackenförmige Fixierteile 32, die den Öffnungsrand 23 im eingeschraubten Zustand überragen, so dass ein an dem Holzkörper 3 zu fixierendes Holzteil durch Aufstecken auf die Fixierteile 32 drehfest festgelegt werden kann, bevor oder während das Holzteil mit einer mit dem Innengewinde 30 zu verschraubenden Fixierschraube fixiert wird.

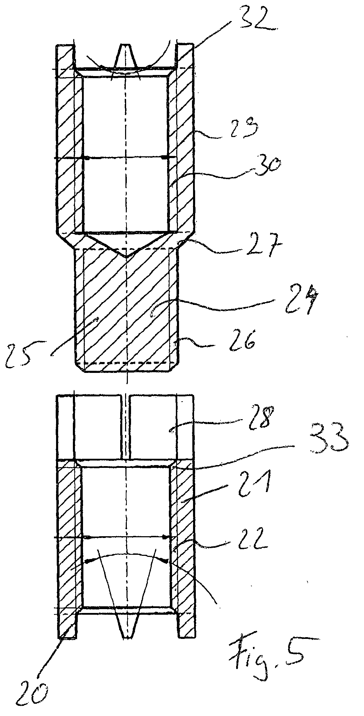

In Fig. 5 ist ein System, umfassend einen Dübel 21 mit endseitigen, in Umfangsrichtung voneinander beabstandeten Zinnen 28 und einem mit diesem verschraubbaren Einschraubteil 24 gezeigt. Die Zinnen 28 können, wie erläutert, aus der dargestellten zylindrischen Hüllkontur nach radial außen aufgeweitet werden und zwar durch verschrauben des Außengewindes 26 des Einschraubteils 24 mit dem Innengewinde 22 des Dübels 21. Hierzu weist das Einschraubteil 24 den Aufweitabschnitt 27 auf, der das Außengewinde 26 in radialer Richtung überragt und die Zinnen 28 radial kraftbeaufschlagt. Im festgezogenen Zustand liegt der Außenkonus des Aufweitabschnittes 27 auf einem Innenkonus 33 mit geringerer Radialerstreckung des Dübels 21 axial auf.

Aus Fig. 5 ist zu erkennen, dass das Maß des Innengewindes 30 des Einschraubteils 24 demjenigen des Innengewindes 22 des Dübels 21 entspricht.

Der Aufweitabschnitt 27 verbindet den außengewindefreien Innengewindeabschnitt 29 des Einschraubteils 24 mit dessen Außengewindeabschnitt 25.

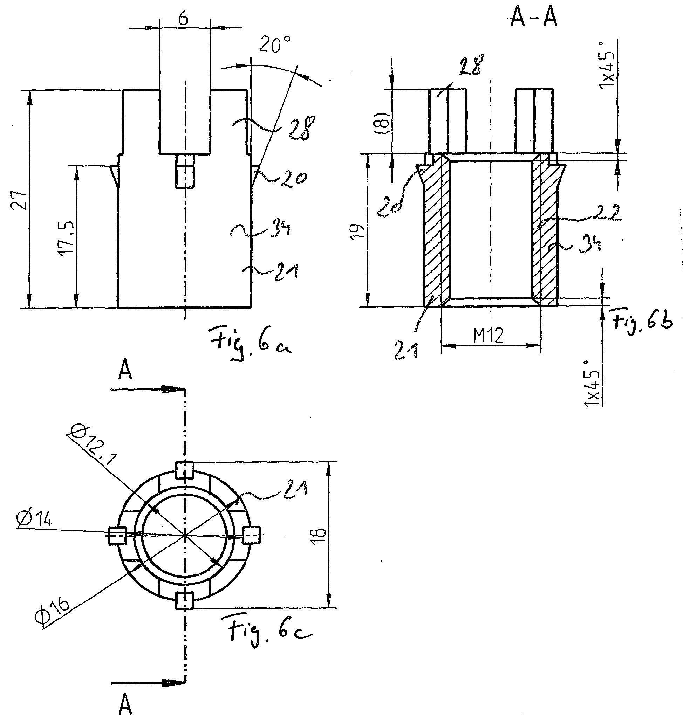

In den Fig. 6a bis 6c ist in teilweise geschnittenen Ansichten (Fig. 6b) ein alternatives Ausführungsbeispiel eines Dübels 21 gezeigt. Der Dübel 21 umfasst einen Hülsenabschnitt 34 mit Innengewinde 22, wobei axial entgegen der Einbringrichtung an den Hülsenabschnitt 34 in radialer Richtung aufweitbar und in Umfangsrichtung voneinander beabstandete Zinnen 28 vorgesehen sind. Das Ausführungsbeispiel des Dübels 21 gemäß den Fig. 6a bis 6c unterscheidet sich von dem voranstehend beschriebenen Ausführungsbeispiel im Wesentlichen dadurch, dass keine in der Einbringrichtung orientierten Fixiermittel 20 vorgesehen sind (welche bei einer alternativen Ausführungsform selbstverständlich auch zusätzlich vorgesehen sein können), sondern dass stattdessen seitliche Fixiermittel 20 in Form Widerhaken vorgesehen sind, die sich in radialer Richtung über den Außenumfang des Hülsenabschnittes 34 erstrecken und deren Radialerstreckung entgegen der Einbringrichtung zunimmt. In dem gezeigten Ausführungsbeispiel sind vier gleichmäßig in Umfangsrichtung verteilt angeordnete Fixiermittel, hier Widerhaken vorgesehen, wobei die Anzahl auch variieren kann. Bevorzugt sind mindestens zwei solcher Fixiermittel über den Umfang verteilt angeordnet. In dem gezeigten Ausführungsbeispiel sind die Fixiermittel - was besonders bevorzugt ist - in einem Umfangsbereich zwischen zwei benachbarten Zinnen 28 vorgesehen.

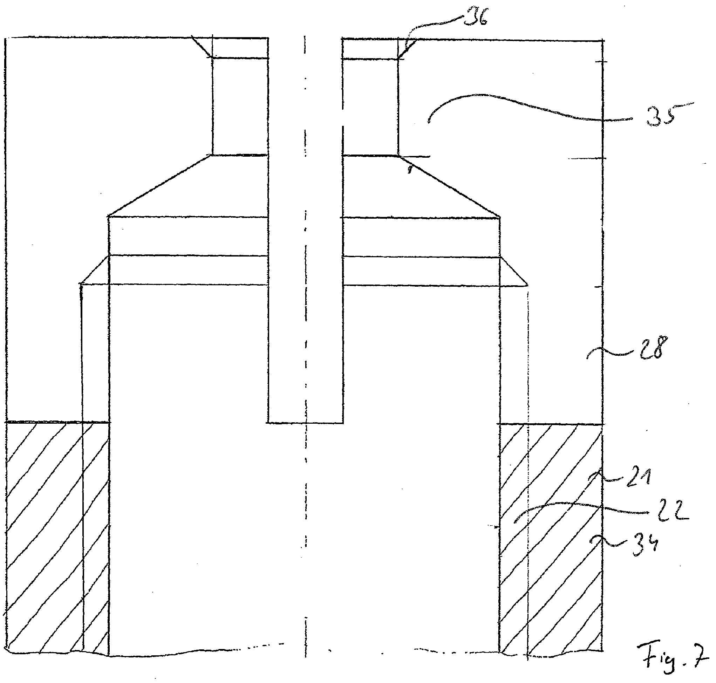

In Fig. 7 ist ein besonders bevorzugtes Ausführungsbeispiel eines Dübels 21, insbesondere zum Einbringen in einen Holzkörper gezeigt. Zu erkennen ist in einem in der Einbringrichtung gelegenen Bereich der Hülsabschnitt 34 mit seinem Innengewinde 22, an welchen entgegen der Ein-5 bringrichtung der Zinnenabschnitt mit seinen in radialer Richtung aufweitbaren Zinnen 28 anschließt. Die Zinnen sind in dem gezeigten Ausführungsbeispiel in Umfangsrichtung beabstandet. Im Gegensatz zu dem voranstehend beschriebenen Ausführungsbeispielen eines Dübels überragen die Zinnen 28 bei dem gezeigten Ausführungsbeispiel den Innen-umfang des Hülsenabschnittes 34 und damit das Innengewinde 22 in radialer Richtung nach innen und zwar mit einem axial hinteren Kragabschnitt 35, so dass der freie Durchmesser im Bereich dieses Kragabschnittes 35 im Vergleich zu dem Innendurchmesser im Bereich des Innengewindes 22 deutlich reduziert ist. Auf diese Weise kann ein Aufweitab-schnitt wesentlich weiter radial innen eingreifen und somit die Zinnen 28 verbessert nach radial außen aufbiegen. Zur besseren Wechselwirkung mit einem derartigen Aufweitabschnitt ist am Kragabschnitt 35 am Innenumfang eine Fase 36 vorgesehen.

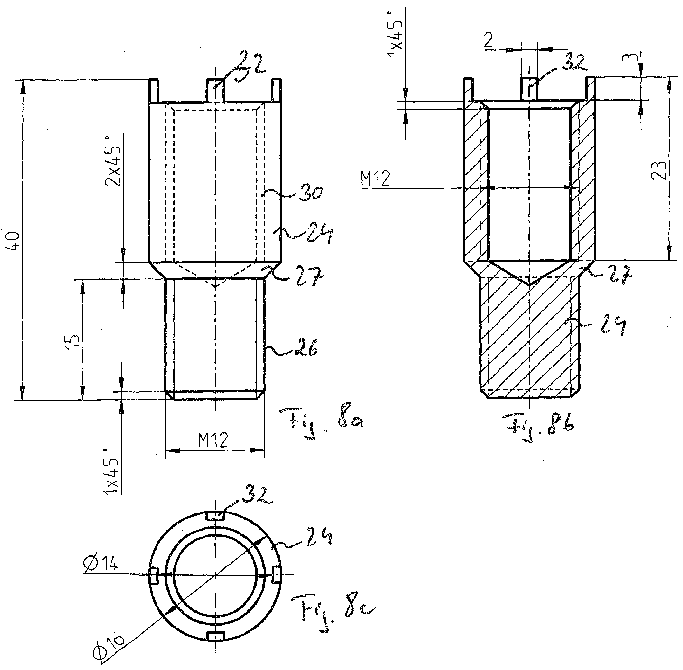

Das in den Fig. 8a bis 8c gezeigte Einschraubteil 24 unterscheidet sich von dem in den Fig. 4 und 5 gezeigten Einschraubteil im Wesentlichen dadurch, dass die endseitigen und in Umfangsrichtung beabstandeten Fixierteile eine im Wesentlichen rechteckige und keine zackenförmige Umfangskontur aufweisen. Darüber hinaus ist die Wandstärke der Fixierteile 32 im Vergleich zu dem zuvor beschriebenen Ausführungsbeispiel etwas geringer um ein erleichtertes Einbringen zu ermöglichen. Die rechteckige Kontur (betrachtet in Umfangsrichtung) ermöglicht einen sehr sicheren Halt und vermeidet axiale Lösekraftkomponenten bei Torsion bzw. Rotation eines fixierten Holzteils. Ansonsten weist das Einschraubteil 24 den im Zusammenhang mit dem vorhergehenden Ausführungsbeispiel beschriebenen wichtigen Aufweitabschnitt auf, um die Zinnen eines zugehörigen Dübels aufzuweiten. Das Außengewinde 26 kann mit einem Innengewinde 22 des Dübels verschraubt werden. In dem Innengewinde 30 kann eine Fixierschraube festgelegt werden, um ein an dem Einschraubteil 24 festzulegendes Teil, beispielsweise ein Holzteil zwischen dem Schraubenkopf der Schraube und einer oberen Stirnseite des Einschraubteils in einem Bereich unterhalb der Fixierteile 32 zu klemmen.

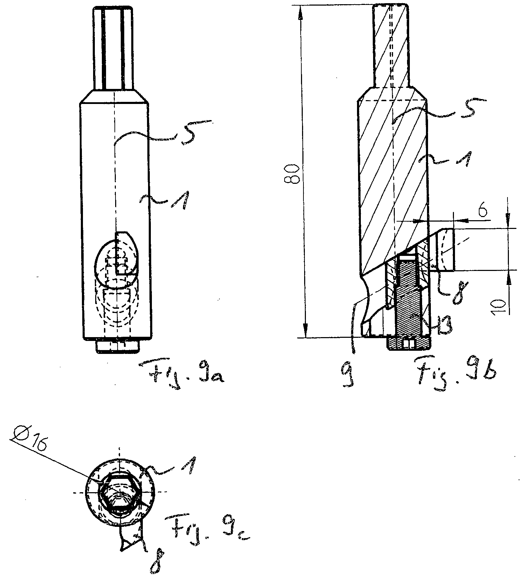

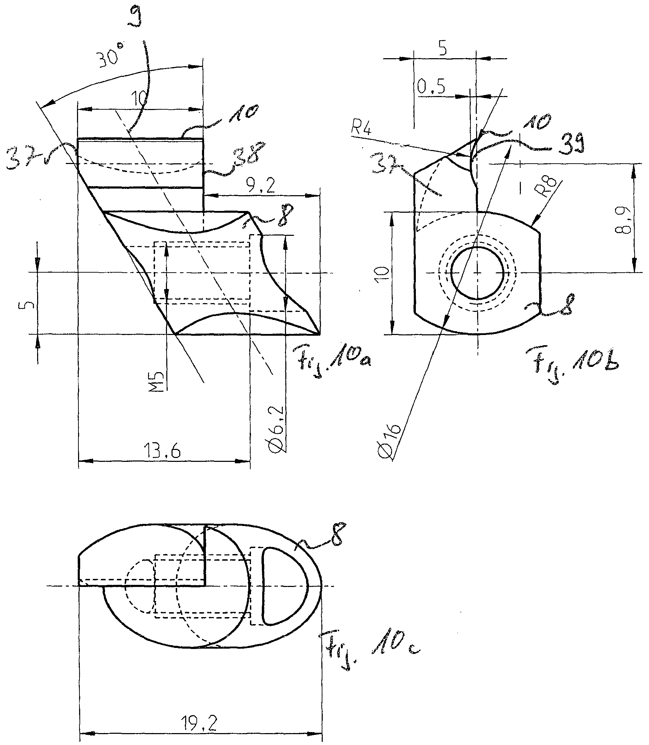

In den Fig. 9a bis 9c ist ein alternatives Werkzeug 1 gezeigt, welches sich von dem in den Fig. 1 und 2 gezeigten Werkzeug 1 im Wesentlichen nur durch die Ausgestaltung des im Detail in den Fig. 10a bis 10c gezeigten Frästeils 8 unterscheidet. Ansonsten ist der Aufbau und die Wirkungsweise im Wesentlichen identisch, so dass auf die entsprechenden Textstellen zu dem vorhergehenden Ausführungsbeispiel verwiesen wird.

Das Frästeil 8 gemäß den Fig. 9a bis 10c weist nicht zwei zueinander winklig verlaufende Fräskanten, sondern eine geradlinige Fräskante 10 auf, die sich parallel zur Drehachse 5 erstreckt. Eine obere und eine untere an die gerade Fräskante angrenzende Seite 37, 38 verlaufen jeweils in einer Radialebene bezogen auf die Rotationsachse und fluchten nicht mit der Verstellachse 9, entlang derer das Frästeil durch Druckbeaufschlagung der Abstützmittel 13 des Werkzeugs 1 verstellt wird. Wie sich insbesondere aus einer Zusammenschau der Fig. 10a und 10b ergibt, läuft das Frästeil unter einem spitzen Winkel auf die Fräskante 10 zu, wobei in radialer Richtung auf der in der Umdrehungsrichtung gelegenen Seite des Frästeils eine konkave Aushöhlung 39 angrenzt, die unter anderem für eine gute Spannabfuhr Sorge trägt.

### Bezugszeichen

- 1: Werkzeug
- 2: Hinterschnitt
- 3: Holzkörper
- 4: Trägerkörper
- 5: Drehachse
- 6: Antrieb
- 7: Führungskanal für das Frästeil
- 8: Frästeil
- 9: Verstellachse
- 10: Fräskante
- 11: Fräskante
- 12: Kanal für die Abstützmittel
- 13: Abstützmittel
- 14: Abstützfläche
- 15: Bohrung
- 16: Grund
- 17: Anschlag
- 18: Anschlag
- 19: Schrägfläche
- 20: Fixiermittel
- 21: Dübel
- 22: Innengewinde
- 23: Öffnungsrand
- 24: Einschraubteil
- 25: Außengewindeabschnitt
- 26: Außengewinde
- 27: Aufweitabschnitt
- 28: Zinnen
- 29: Innengewindeabschnitt
- 30: Innengewinde
- 31: Stirnfläche
- 32: Fixierteile
- 33: Innenkonus
- 34: Hülsenabschnitt
- 35: Kragabschnitt
- 36: Fase
- 37: Seite
- 38: Seite
- 39: Ausbuchtung

## Patentansprüche

1. Werkzeug zum Erzeugen eines ringförmigen Hinterschnittes (2) in einem Körper (3), nämlich in einem Holzkörper, einem Steinkörper oder einem Kunststoffkörper mit Abstand zu dessen Außenoberfläche, mit einem um eine Drehachse (5) rotierbar antreibbaren Trägerkörper (4) für ein relativ zum Trägerkörper (4) zur Vergrößerung des Hinterschnittes nach radial außen verstellbares Frästeil (8) dem sich entlang der Drehachse (5) erstreckende und entlang der Drehachse (5) relativ zu dem Trägerkörper (4) verstellbare Abstützmittel (13) zugeordnet sind, welche eine Abstützfläche (14) zum Abstützen an einer Holzkörperfläche, einer Steinkörperfläche oder einer Kunststoffkörperfläche insbesondere am Grund (16) einer Bohrung (15) in dem Körper (3) aufweise, **dadurch gekennzeichnet, dass** das Frästeil entlang einer winklig zur Drehachse (5) verlaufenden Verstellachse (9) verschiebbar geführt ist, wobei die Abstützmittel (13) derart mit dem Frästeil (8) zusammenwirkend ausgebildet und angeordnet sind, dass die Abstützmittel (13) bei einer Relativbewegung zu dem Trägerkörper (4) entlang der Drehachse (5) und einem damit verbundenen geringer werdenden Abstand zwischen der Abstützfläche (14) und dem Trägerkörper (4) das Frästeil (8) so entlang der Verstellachse (9) verschieben, dass dieses weiter nach radial außen bezogen auf die Drehachse (5) verstellbar ist, um die Radialerstreckung des Hinterschnittes (2) zu vergrößern.

2. Werkzeug nach Anspruch 1,
**dadurch gekennzeichnet,**
**dass** die Abstützmittel (13) einteilig mit dem Frästeil (8) ausgebildet sind oder von einem separaten Bauteil gebildet sind, dass unmittelbar, beispielsweise durch Verschrauben, oder mittelbar über mindestens ein weiteres Bauteil an dem Frästeil (8) festgelegt ist.

3. Werkzeug nach einem der Ansprüche 1 oder 2,
**dadurch gekennzeichnet,**
**dass** das Frästeil (8) so ausgebildet und derart entlang der Verstellachse verstellbar ist, dass es vollständig innerhalb einer, bevorzugt zylindrischen, Hüllkontur des Trägerkörpers (4) aufgenommen ist.

4. Werkzeug nach einem der vorhergehenden Ansprüche,
**dadurch gekennzeichnet,**
**dass** das Frästeil (8) derart geführt angeordnet ist, dass es bei einer Verstellbewegung nach radial außen gleichzeitig axial von einer Unterseite des Trägerkörpers (4) weg verstellt wird.

5. Werkzeug nach einem der vorhergehenden Ansprüche,
**dadurch gekennzeichnet,**
**dass** zur Führung des Frästeils (8) ein, insbesondere linearer, vorzugsweise durchgehender, Kanal (7) in dem Trägerkörper (4) vorgesehen ist, in dem das Frästeil (8) mit einem Führungsspiel aufgenommen ist.

6. Werkzeug nach einem der vorhergehenden Ansprüche,
**dadurch gekennzeichnet,**
**dass** den Abstützmitteln (13) ein sich parallel zur Drehachse (5) erstreckender Kanal (12) zugeordnet sind, dessen Innenumfangswand mindestens einen Anschlag (17, 18) zur Begrenzung der Verstellstrecke des Frästeils (8) bildet.

7. Werkzeug nach einem der vorhergehenden Ansprüche,
**dadurch gekennzeichnet,**
**dass** die Verstellachse (9) des Frästeils (8) unter einem Winkel aus einem Winkelbereich zwischen 45° und 85°, vorzugsweise zwischen 55° und 75°, weiter bevorzugt von 60° zur Drehachse (5) verläuft.

8. Werkzeug nach einem der vorhergehenden Ansprüche,
**dadurch gekennzeichnet,**
**dass** Spanabführmittel, in Form mindestens einer geraden oder gekrümmten, insbesondere gewendelten Nut am Trägerkörper (4) vorgesehen sind.

9. Werkzeug nach einem der vorhergehenden Ansprüche,
**dadurch gekennzeichnet,**
**dass** das Frästeil (8) auf einer Frässeite zwei winklig zueinander verlaufende Fräskanten (10, 11) aufweist.

10. Werkzeug nach einem der vorhergehenden Ansprüche,
**dadurch gekennzeichnet,**
**dass** an dem Werkzeug (1), insbesondere an dem Trägerkörper (4), ein Antrieb (6) zum Festlegen des Werkzeugs (1) an einem Antriebswerkzeug, insbesondere einem Elektrohandwerkzeug, vorgesehen ist.

11. Verfahren zum Festlegen eines Dübels (21) in einem Körper (3), nämlich einem Holzkörper, einem Steinkörper oder einem Kunststoffkörper mit den Schritten:
• Einbringen einer Bohrung, insbesondere einer Sacklochbohrung in den Körper (3);
• Herstellen eines ringförmigen Hinterschnittes (2) in dem Körper (3);
• Herausziehen des Werkzeugs (1);
• Einsetzen eines mehrere in Umfangsrichtung voneinander beabstandete oder über Materialschwächungsbereiche miteinander verbundene erstreckende Zinnen aufweisenden Dübels (21) in die Bohrung (15);
• Beaufschlagen der Zinnen mit einer Radialkraftkomponente und dadurch Umbiegen der Zinnen in den Hinterschnitt (2),
**dadurch gekennzeichnet, dass** der Hinterschnitt (2) mit einem Werkzeug (1) nach einem der vorhergehenden Ansprüche hergestellt wird durch Einführen des Werkzeugs (1) in die Bohrung (15) und Drücken des Werkzeugs (1) in Einbringrichtung gegen den Grund (16) der Bohrung (15) während einer Rotation des Werkzeugs (1), und dass die Zinnen des Dübels entgegen der Einsetzrichtung orientiert sind.

12. Verfahren nach Anspruch 11,
**dadurch gekennzeichnet,**
**dass** der Dübel (21) vor und/oder während des Beaufschlagens der Zinnen mit der Radialkraftkomponente im Grund (16) der Bohrung (15) mittels endseitiger, insbesondere krallenförmiger, Fixiermittel (20) des Dübels (21), insbesondere drehfest, fixiert wird.

13. Verfahren nach einem der Ansprüche 11 oder 12,
**dadurch gekennzeichnet,**
**dass** das Aufweiten der Zinnen mit einem, insbesondere einen Aufweitkonus aufweisenden Aufweitwerkzeug durchgeführt wird, welches noch weiter bevorzugt beim Radialkraftbeaufschlagen der Zinnen rotiert wird.

14. Dübel zum Einsetzen in eine Bohrung, insbesondere eine Sacklochbohrung in einem Körper (3), nämlich einem Holzkörper, einem Steinkörper oder einem Kunststoffkörper umfassend einen Hülsenabschnitt mit Innengewinde oder einen Abschnitt zum Einformen eines Innengewindes sowie endseitige entgegen einer Einsetzrichtung orientierte und in radialer Richtung aufweitbare Zinnen, die in Umfangsrichtung voneinander beabstandet oder über Materialschwächungsbereiche miteinander verbunden sind,
**dadurch gekennzeichnet,**
**dass** der Dübel endseitige und in der Einsetzrichtung orientierte, in einen Grund einer Sacklochbohrung einschlagbare, insbesondere krallenförmige, Fixiermittel (20) zur drehfesten Fixierung des Dübels im Körper (3) aufweist.

15. Dübel nach Anspruch 14,
**dadurch gekennzeichnet,**
**dass** die Zinnen vor dem radialen Aufweiten den Innenumfang des Hülsenabschnitts in radialer Richtung nach innen überragen.

16. Dübel- / Einschraubteilsystem, umfassend einen Dübel nach einem der Ansprüche 14 oder 15 und ein mittels eines Außengewindes (26) mit dem Innengewinde des Dübels verschraubbares Einschraubteil, mit dem beim Einschrauben in den Dübel dessen Zinnen in radialer Richtung aufweitbar sind, wobei das Einschraubteil ein Innengewinde (30) aufweist, das in einen im Vergleich zu dem das Außengewinde (26) aufweisenden Außengewindeabschnitt (25) durchmessererweiterten Innengewindeabschnitt (29) eingebracht ist.

17. Verwendung eines Dübels nach einem der Ansprüche 14 bis 15 zum Einsetzen in einen Holzköper, einen Steinkörper oder einen Kunststoffkörper, insbesondere unter Verwendung eines Werkzeugs nach einem der Ansprüche 1 bis 10 und/oder unter Anwendung eines Verfahrens nach einem der Ansprüche 11 bis 13.

18. System, umfassend ein Werkzeug (1) nach einem der Ansprüche 1 bis 10 sowie einen mehrere in Umfangsrichtung voneinander beabstandete oder über Materialschwächungsbereiche miteinander verbundene und sich entgegen der Einsetzrichtung erstreckende Zinnen aufweisenden Dübel (21) gemäß einem der Ansprüche 14 bis 15.

19. System, nach Anspruch 18, **gekennzeichnet durch** ein Einschraubteil (24) mit einem Außengewinde (26), das mit einem Innengewinde (22) des Dübels (21) verschraubbar ist, wobei das Einschraubteil (24) benachbart zu dem Außengewinde (26) einen, vorzugsweise konisch konturierten, Aufweitabschnitt (27) aufweist, der derart ausgebildet ist, dass mit diesem die Zinnen (28) des Dübels (21) beim Einschrauben des Außengewindes (26) des Einschraubteils (24) in das Innengewindes (22) des Dübels (21) in radialer Richtung nach außen aufweitbar sind, und wobei das Einschraubteil (24) ein Innengewinde (30) aufweist, dessen Innendurchmesser vorzugsweise dem Innendurchmesser des Innengewindes (22) des Dübels (21) entspricht.

20. System nach Anspruch 19,
**dadurch gekennzeichnet,**
**dass** das Einschraubteil (24) endseitige Fixierteile (32) aufweist, die zum drehfesten Festlegen eines Teils, insbesondere eines Holzteils vor und/oder während des Fixierens des Teils an dem Einschraubteil (24) mit einer Fixierschraube ausgebildet sind.

## Claims

1. A tool for producing an annular undercut (2) in a body (3), namely in a wood body, a stone body or a plastic body, at a distance from its outer surface, with a carrier (4), which can be driven and rotated about an axis of rotation (5), for a milling section (8) that can be adjusted radially outward relative to the carrier (4) for purposes of increasing the undercut, to which are assigned means of support (13) that extend along the axis of rotation (5) and can be adjusted along the axis of rotation (5) relative to the carrier (4), which have a support surface (14) for purposes of providing support on a wood body surface, a stone body surface, or a plastic body surface, in particular at the base (16) of a bore (15) in the body (3), **characterised in that** the milling section is guided such that it can be displaced along an adjustment axis (9) running at an angle to the axis of rotation (5), wherein the means of support (13), interacting with the milling section (8), are designed and arranged such that in the event of a movement relative to the carrier (4) along the axis of rotation (5), and a therewith associated distance between the support surface (14) and the carrier (4) that becomes smaller, the means of support (13) displace the milling section (8) along the adjustment axis (9) such that the latter can be adjusted further radially outward relative to the axis of rotation (5), so as to increase the radial extent of the undercut (2).

2. The tool in accordance with claim 1, **characterised in that** the means of support (13) are designed integrally with the milling section (8), or are formed as a separate component, which is directly, for example by screwing together, or indirectly, via at least one other component, fixed on the milling section (8).

3. The tool in accordance with one of the claims 1 or 2, **characterised in that** the milling section (8) is designed, and can be adjusted along the adjustment axis, such that it is completely accommodated within an envelope contour, preferably cylindrical, of the carrier (4).

4. The tool in accordance with one of the preceding claims, **characterised in that** the milling section (8) is arranged with guidance such that, in the event of an adjustment movement radially outward, it is at the same time adjusted axially away from a lower face of the carrier (4).

5. The tool in accordance with one of the preceding claims, **characterised in that** for the guidance of the milling section (8) a passage (7), in particular one that is linear and preferably continuous, is provided in the carrier (4), in which the milling section (8) is accommodated with guide clearance.

6. The tool in accordance with one of the preceding claims, **characterised in that** a passage (12) extending parallel to the axis of rotation (5) is assigned to the means of support (13), whose internal peripheral wall forms at least one stop (17, 18) for purposes of limiting the adjustment path of the milling section (8).

7. The tool in accordance with one of the preceding claims, **characterised in that** the adjustment axis (9) of the milling section (8) runs at an angle from a range between 45° and 85°, preferably between 55° and 75°, more preferably of 60°, relative to the axis of rotation (5).

8. The tool in accordance with one of the preceding claims, **characterised in that** chip removal means, in the form of at least one straight or curved, in particular a spiral, groove, are provided on the carrier (4).

9. The tool in accordance with one of the preceding claims, **characterised in that** on one milling face the milling section (8) has two milling edges (10, 11) running at an angle relative to one another.

10. The tool in accordance with one of the preceding claims, **characterised in that** on the tool (1), in particular on the carrier (4), a drive (6) is provided for fixing the tool (1) on a drive tool, in particular an electrical hand tool.

11. A method for fixing a dowel (21) in a body (3), namely a wood body, a stone body, or a plastic body with the steps:
• introduction of a bore, in particular a blind bore, into the body (3);
• manufacture of an annular undercut (2) in the body (3);
• extraction of the tool (1):
• insertion of a dowel (21) having a plurality of castellations extending in the peripheral direction, spaced apart from one another, or connected with one another via regions of material weakness, into the bore (15);
• application of a radial force component to the castellations, and thereby bending of the castellations into the undercut (2),
**characterised in that** the undercut (2) is manufactured with a tool (1) in accordance with one of the preceding claims by the introduction of the tool (1) into the bore (15) and the pressing of the tool (1) in the direction of introduction against the base (16) of the bore (15) during a rotation of the tool (1), and **in that** the castellations of the dowel are oriented against the direction of insertion.

12. The method in accordance with claim 11, **characterised in that** before and/or during the application of the radial force component to the castellations, the dowel (21) is fixed, in particular in a torque-proof manner, in the base (16) of the bore (15) by means of fixing means (20), in particular claw-shaped, on the end face of the dowel (21).

13. The method in accordance with one of the claims 11 or 12, **characterised in that** the expansion of the castellations is executed with an expansion tool, in particular one having an expansion cone, which, more preferably, is rotated as the radial force is applied onto the castellations.

14. A dowel for insertion into a bore, in particular a blind bore, in a body (3), namely a wood body, a stone body, or a plastic body, comprising a sleeve section with an internal thread or a section for purposes of forming an internal thread, together with end face castellations, oriented against a direction of insertion and expandable in the radial direction, which are spaced apart from one another in the peripheral direction, or are connected with one another via regions of material weakness, **characterised in that** the dowel has fixing means (20), in particular claw-shaped, on its end face, and oriented in the direction of insertion, which can be driven into a base of a blind bore for purposes of torque-proof fixing of the dowel in the body (3).

15. The dowel in accordance with claim 14, **characterised in that** before the radial expansion the castellations project beyond the inner periphery of the sleeve section in the radially inward direction.

16. A dowel/screw-in section system comprising a dowel in accordance with one of the claims 14 or 15, and a screw-in section that by means of an external thread (26) can be screwed together with the internal thread of the dowel, with which screw-in section, when it is screwed into the dowel, the castellations of the latter can be expanded in the radial direction, wherein the screw-in section has an internal thread (30), which is introduced into an internal thread section (29) with a diameter that is larger when compared with that of the external thread section (25) having the external thread (26).

17. A use of a dowel in accordance with one of the claims 14 to 15 for insertion into a wood body, a stone body, or a plastic body, in particular using a tool in accordance with one of the claims 1 to 10, and/or with the application of a method in accordance with one of the claims 11 to 13.

18. A system, comprising a tool (1) in accordance with one of the claims 1 to 10, together with a dowel (21) having a plurality of castellations, spaced apart from one another in the peripheral direction, or connected with one another via regions of material weakness, and extending against the direction of insertion, in accordance with one of the claims 14 to 15.

19. The system in accordance with claim 18, **characterised by** a screw-in section (24) with an external thread (26), which can be screwed together with an internal thread (22) of the dowel (21), wherein adjacent to the external thread (26) the screw-in section (24) has a preferably conically contoured expansion section (27), which is designed such that with the latter, as the external thread (26) of the screw-in section (24) is screwed into the internal thread (22) of the dowel (21), the castellations (28) of the dowel (21) can be expanded in the radially outward direction, and wherein the screw-in section (24) has an internal thread (30), the inner diameter of which preferably corresponds to the internal diameter of the internal thread (22) of the dowel (21).

20. The system in accordance with claim 19, **characterised in that** the screw-in section (24) has end face fixing sections (32), which are designed for the torque-proof fixing of a part, in particular a wood part, before and/or during the fixing of the part on the screw-in section (24) with a fixing screw.

## Revendications

1. Outil pour réaliser une contre-dépouille de forme annulaire (2) dans un corps (3), en particulier dans un corps en bois, un corps en pierre ou un corps en plastique à distance de sa surface extérieure, comprenant un corps de support (4) pouvant être entraîné en rotation autour d'un axe de rotation (5) pour une partie de fraise (8) déplaçable radialement vers l'extérieur par rapport au corps de support (4) pour agrandir la contre-dépouille, à laquelle sont associés des moyens d'appui (13) s'étendant le long de l'axe de rotation (5) et déplaçables le long de l'axe de rotation (5) par rapport au corps de support (4), lesquels présentent une surface d'appui (14) destinée à s'appuyer contre une surface d'un corps en bois, une surface d'un corps en pierre ou une surface d'un corps en plastique, en particulier au fond (16) d'un alésage (15) dans le corps (3), **caractérisé en ce que** la partie de fraise est guidée de manière déplaçable le long d'un axe de déplacement (9) s'étendant suivant un certain angle par rapport à l'axe de rotation (5), les moyens d'appui (13) étant réalisés et disposés de manière à coopérer avec la partie de fraise (8) de telle sorte que les moyens d'appui (13), lors d'un mouvement relatif vers le corps de support (4) le long de l'axe de rotation (5) avec la réduction associée de la distance entre la surface d'appui (14) et le corps de support (4), déplacent la partie de fraise (8) le long de l'axe de déplacement (9) de telle sorte que celle-ci puisse être déplacée davantage radialement vers l'extérieur par rapport à l'axe de rotation (5) afin d'agrandir l'étendue radiale de la contre-dépouille (2).

2. Outil selon la revendication 1,
**caractérisé en ce que**
les moyens d'appui (13) sont réalisés d'une seule pièce avec la partie de fraise (8) ou sont formés par un composant séparé, qui est fixé directement, par exemple par vissage, ou indirectement par le biais d'au moins un autre composant, à la partie de fraise (8).

3. Outil selon l'une quelconque des revendications 1 ou 2,
**caractérisé en ce que**
la partie de fraise (8) est réalisée et peut être déplacée le long de l'axe de déplacement de telle sorte qu'elle soit complètement reçue à l'intérieur d'un contour d'enveloppe du corps de support (4), de préférence cylindrique.

4. Outil selon l'une quelconque des revendications précédentes,
**caractérisé en ce que**
la partie de fraise (8) est disposée de manière guidée de telle sorte que lors d'un mouvement de déplacement radialement vers l'extérieur, elle soit déplacée simultanément axialement à l'écart d'un côté inférieur du corps de support (4).

5. Outil selon l'une quelconque des revendications précédentes,
**caractérisé en ce que**
pour le guidage de la partie de fraise (8), il est prévu un canal (7) en particulier linéaire, de préférence continu, dans le corps de support (4), dans lequel la partie de fraise (8) est reçue avec un jeu de guidage.

6. Outil selon l'une quelconque des revendications précédentes,
**caractérisé en ce**
**qu'**un canal (12) s'étendant parallèlement à l'axe de rotation (5) est associé aux moyens d'appui (13), sa paroi périphérique intérieure formant au moins une butée (17, 18) pour limiter la distance de déplacement de la partie de fraise (8).

7. Outil selon l'une quelconque des revendications précédentes,
**caractérisé en ce que**
l'axe de déplacement (9) de la partie de fraise (8) s'étend suivant un angle compris dans une plage angulaire de 45° à 85°, de préférence de 55° à 75°, plus préférablement de 60° par rapport à l'axe de rotation (5).

8. Outil selon l'une quelconque des revendications précédentes,
**caractérisé en ce que**
des moyens d'évacuation des copeaux, sous la forme d'au moins une rainure droite ou courbée, en particulier enroulée en hélice, sont prévus sur le corps de support (4).

9. Outil selon l'une quelconque des revendications précédentes,
**caractérisé en ce que**
la partie de fraise (8) présente, sur un côté de fraise, deux arêtes de fraise (10, 11) s'étendant suivant un certain angle l'une par rapport à l'autre.

10. Outil selon l'une quelconque des revendications précédentes,
**caractérisé en ce**
**qu'**un entraînement (6) pour la fixation de l'outil (1) à un outil d'entraînement, en particulier à un outil électrique manuel, est prévu sur l'outil (1), en particulier sur le corps de support (4).

11. Procédé pour fixer une cheville (21) dans un corps (3), à savoir un corps en bois, un corps en pierre ou un corps en plastique, comprenant les étapes suivantes :
- réalisation d'un alésage, en particulier d'un alésage borgne dans le corps (3) ;
- fabrication d'une contre-dépouille annulaire (2) dans le corps (3) ;
- retrait de l'outil (1) ;
- insertion dans l'alésage (15) d'une cheville (21) présentant plusieurs dents espacées les unes des autres dans la direction périphérique ou s'étendant de manière connectée les unes aux autres sur des régions d'affaiblissement de matériau ;
- sollicitation des dents avec une composante de force radiale et recourbement des dents dans la contre-dépouille (2),
**caractérisé en ce que** la contre-dépouille (2) est fabriquée avec un outil (1) selon l'une quelconque des revendications précédentes par introduction de l'outil (1) dans l'alésage (15) et pression de l'outil (1) dans la direction d'introduction vers le fond (16) de l'alésage (15) pendant une rotation de l'outil (1), et **en ce que** les dents de la cheville sont orientées à l'encontre de la direction d'insertion.

12. Procédé selon la revendication 11,
**caractérisé en ce que**
la cheville (21) avant et/ou pendant la sollicitation des dents avec la composante de force radiale est fixée dans le fond (16) de l'alésage (15) notamment de manière solidaire en rotation au moyen de moyens de fixation (20) de la cheville (21), disposés du côté de l'extrémité, en particulier en forme de griffes.

13. Procédé selon l'une quelconque des revendications 11 ou 12,
**caractérisé en ce que**
l'élargissement des dents est effectué avec un outil d'élargissement présentant notamment un cône d'élargissement, qui est tourné encore plus préférablement lors de la sollicitation par une force radiale des dents.

14. Cheville pour l'insertion dans un alésage, en particulier un alésage borgne dans un corps (3), à savoir un corps en bois, un corps en pierre ou un corps en plastique comprenant une portion de douille avec un filetage intérieur ou une portion pour former un filetage intérieur ainsi que des dents du côté de l'extrémité pouvant être élargies dans la direction radiale et orientées à l'encontre d'une direction d'insertion, lesquelles dents sont espacées les unes des autres dans la direction périphérique ou sont connectées les unes aux autres par le biais de régions d'affaiblissement de matériau,
**caractérisée en ce que**
la cheville présente des moyens de fixation (20) pour la fixation solidaire en rotation de la cheville dans le corps (3), disposés du côté de l'extrémité et orientés dans la direction d'insertion, pouvant être enfoncés dans le fond d'un alésage borgne, en particulier en forme de griffes.

15. Cheville selon la revendication 14,
**caractérisée en ce que**
les dents dépassent vers l'intérieur dans la direction radiale avant l'élargissement radial de la périphérie intérieure de la portion de douille.

16. Système de cheville/pièce à visser, comprenant une cheville selon l'une quelconque des revendications 14 ou 15 et une pièce à visser pouvant être vissée au moyen d'un filetage extérieur (26) avec le filetage intérieur de la cheville, avec laquelle, lors du vissage dans la cheville, ses dents peuvent être élargies dans la direction radiale, la pièce à visser présentant un filetage intérieur (30) qui est introduit dans une portion de filetage intérieur (29) de diamètre élargi par rapport à la portion de filetage extérieur (25) présentant le filetage extérieur (26).

17. Utilisation d'une cheville selon l'une quelconque des revendications 14 à 15, pour l'insertion dans un corps en bois, un corps en pierre ou un corps en plastique, en particulier en utilisant un outil selon l'une quelconque des revendications 1 à 10 et/ou en appliquant un procédé selon l'une quelconque des revendications 11 à 13.

18. Système, comprenant un outil (1) selon l'une quelconque des revendications 1 à 10, ainsi qu'une cheville (21) selon l'une quelconque des revendications 14 à 15 présentant plusieurs dents espacées les unes des autres dans la direction périphérique ou connectées les unes aux autres par le biais de régions d'affaiblissement de matériau et s'étendant à l'encontre de la direction d'insertion.

19. Système selon la revendication 18, **caractérisé par** une pièce à visser (24) avec un filetage extérieur (26) qui peut être vissé avec un filetage intérieur (22) de la cheville (21), la pièce à visser (24) présentant à proximité du filetage extérieur (26) une portion élargie (27) de profil de préférence conique, qui est réalisée de telle sorte qu'elle permette d'élargir vers l'extérieur dans la direction radiale les dents (28) de la cheville (21) lors du vissage du filetage extérieur (26) de la pièce à visser (24) dans le filetage intérieur (22) de la cheville (21), et la pièce à visser (24) présentant un filetage intérieur (30) dont le diamètre intérieur correspond de préférence au diamètre intérieur du filetage intérieur (22) de la cheville (21).

20. Système selon la revendication 19,
**caractérisé en ce que**
la pièce à visser (24) présente des pièces de fixation (32) du côté de l'extrémité, lesquelles sont réalisées pour la fixation solidaire en rotation d'une pièce, en particulier d'une pièce en bois avant et/ou pendant la fixation de la pièce à la pièce à visser (24) avec une vis de fixation.
